# EUROPEAN PATENT SPECIFICATION

(11) **EP 3 555 758 B1**
(45) Date of publication and mention of the grant of the patent: **19.04.2023**
(21) Application number: 17883224.2
(22) Date of filing: 19.12.2017
(51) Int. Cl.: G06F 15/173, G06Q 20/32, G07C 9/00, H04L 9/08, H04L 9/14, H04L 9/32

(54) **SECURE OFFLINE RESOURCE OPERATIONS**
SICHERER OFFLINE-RESSOURCENBETRIEB
OPÉRATIONS SÉCURISÉES DE RESSOURCES HORS LIGNE

(30) Priority: 19.12.2016 CN 201611175289; 18.12.2017 US 201715845422
(43) Date of publication of application: 23.10.2019
(73) Proprietor: Advanced New Technologies Co., Ltd., George Town, Grand Cayman KY1-9008 (KY)
(72) Inventor: CHEN, Ge, Hangzhou, Zhejiang 311121 (CN); WANG, Lei, Hangzhou, Zhejiang 311121 (CN); SHEN, Lingnan, Hangzhou, Zhejiang 311121 (CN); CHEN, Xing, Hangzhou, Zhejiang 311121 (CN)
(74) Representative: Fish & Richardson P.C.
(86) International application number: PCT/US2017/067334
(87) International publication number: WO 2018/118933

(56) References cited:
- US-A1- 2005 251 680
- US-A1- 2007 043 667
- US-A1- 2010 217 710
- US-A1- 2015 339 664
- US-A1- 2016 012 465
- US-A1- 2016 217 437

## Description

### BACKGROUND

Resources owned by a user can be digitally stored on a resource server. Normally, when the user performs a resource operation (such as, depositing or withdrawing an amount of a resource to or from the resource server), the resource server needs to be online to complete the resource operation.
US 2015/0339664 A1 describes techniques for enhancing the security of a communication device when conducting a transaction using the communication device may include using a limited-use key (LUK) to generate a transaction cryptogram, and using a signature key to generate a signature. The transaction can be an offline data authentication transaction, and access can be granted based on authentication of the signature prior to verifying the transaction cryptogram.
US 2010/217710 A1 describes an electronic money system directed to avoid unauthorized use of certificate-type electronic money. The electronic money system is provided with a management server, a verification sever, a remittance terminal, and a receptor terminal. In response to a request from the remittance terminal, the management server issues an inactive electronic certificate including a certificate ID and notifies the verification server of the certificate ID. The remittance terminal gives a group signature to the inactive electronic certificate to generate an active electronic certificate. The reception terminal verifies the active electronic certificate obtained from the remittance terminal on the basis of the group signature. The verification server matches the certificate ID notified from the management server with the certificate ID included in the active electronic certificate verified by the reception terminal to verify availability of the active electronic certificate.
US 2007/043667 A1 describes a memory device containing control structures that allow media content to be stored securely and distributed in a manner envisioned by the content owner, or service providers involved in the distribution.

### SUMMARY

The present disclosure describes secure offline resource operations. The invention is defined by the appended claims.

In an implementation, information associated with a resource operation is transmitted by a resource requester to a resource provider. The resource operation is associated with a resource stored on a resource server. The information associated with the resource operation is received by the resource provider from the resource requester. The resource operation is performed, by the resource provider, based on the received information from the resource requester instead of information from the resource server.

Implementations of the described subject matter, including the previously described implementation, can be implemented using a computer-implemented method; a non-transitory, computer-readable medium storing computer-readable instructions to perform the computer-implemented method; and a computer-implemented system comprising one or more computer memory devices interoperably coupled with one or more computers and having tangible, non-transitory, machine-readable media storing instructions that, when executed by the one or more computers, perform the computer-implemented method/the computer-readable instructions stored on the non-transitory, computer-readable medium.

The subject matter described in this specification can be implemented in particular implementations, so as to realize one or more of the following advantages. First, the described approach can be used to enable offline resource operations. For example, a user wants to perform an offline resource operation using a user device (such as, withdrawing a certain amount of a resource from a resource server when the resource server is offline). The user device (that is, a resource requester) can transmit information associated with the offline resource operation to a resource provider. The resource provider receives the information, and performs the offline resource operation based on the information received from the user device, instead of information received from the resource server. Second, the described approach can provide secure offline resource operations. A user can use a user device to transmit information associated with a resource operation, instead of carrying resources or using a storage device storing resources, to perform an offline resource operation. As a result, the described approach can avoid resource loss due to, for example, loss of the storage device. Other advantages will be apparent to those of ordinary skill in the art.

The details of one or more implementations of the subject matter of this specification are set forth in the Detailed Description, the Claims, and the accompanying drawings. Other features, aspects, and advantages of the subject matter will become apparent to those of ordinary skill in the art from the Detailed Description, the Claims, and the accompanying drawings.

### DESCRIPTION OF DRAWINGS

FIG. 1 is a flowchart illustrating an example of a computer-implemented method for secure offline resource operations, according to an implementation of the present disclosure.
FIG. 2 is a flowchart illustrating another example of a computer-implemented method for secure offline resource operations, according to an implementation of the present disclosure.
FIG. 3 is a flowchart illustrating a third example of a computer-implemented method for secure offline resource operations, according to an implementation of the present disclosure.
FIG. 4 is a block diagram illustrating an example of a data processing system for secure offline resource operations, according to an implementation of the present disclosure.
FIG. 5 is a block diagram illustrating an example of a computer-implemented system used to provide computational functionalities associated with described algorithms, methods, functions, processes, flows, and procedures, according to an implementation of the present disclosure.

Like reference numbers and designations in the various drawings indicate like elements.

### DETAILED DESCRIPTION

The following detailed description describes secure offline resource operations, and is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations.

Resources owned by a user can be digitally stored on a resource server. The user depositing or withdrawing a certain amount of a resource to or from the resource server changes the amount of the resource owned by the user and stored on the resource server. Normally, when the user performs a resource operation (such as, depositing or withdrawing an amount of a resource to or from the resource server) using a user device, the resource server needs to be online (such as, the user device is connected to the resource server when performing the resource operation) to complete the resource operation. However, for offline resource operations (such as, operating resources when the resource server is offline), a storage device (such as, a magnetic or semiconductor medium) can be used. For example, when the resource server is online, the user can withdraw a certain amount of a resource from the resource server, and store the amount of the resource in the storage device. Using the storage device, the user can perform an offline resource operation by modifying the amount of the resource stored in the storage device, instead of modifying the amount of the resource stored in the resource server. However, if the storage device is lost, the amount of the resource, stored in the storage device and owned by the user, is lost.

At a high-level, the described approach provides a mechanism to perform secure resource operations offline. To perform and complete a secure offline resource operation, a resource requester transmits information associated with the offline resource operation to a resource provider. The resource provider receives the information, and performs the offline resource operation based on the received information from the resource requester, instead of information from a resource server. By performing the resource operation based on the information from the resource requester, the resource server that stores the resource associated with the resource operation can be offline when the resource operation is performed. In addition, performing an offline resource operation based on the received information from the resource requester is more secure than performing the offline resource operation using a storage device.

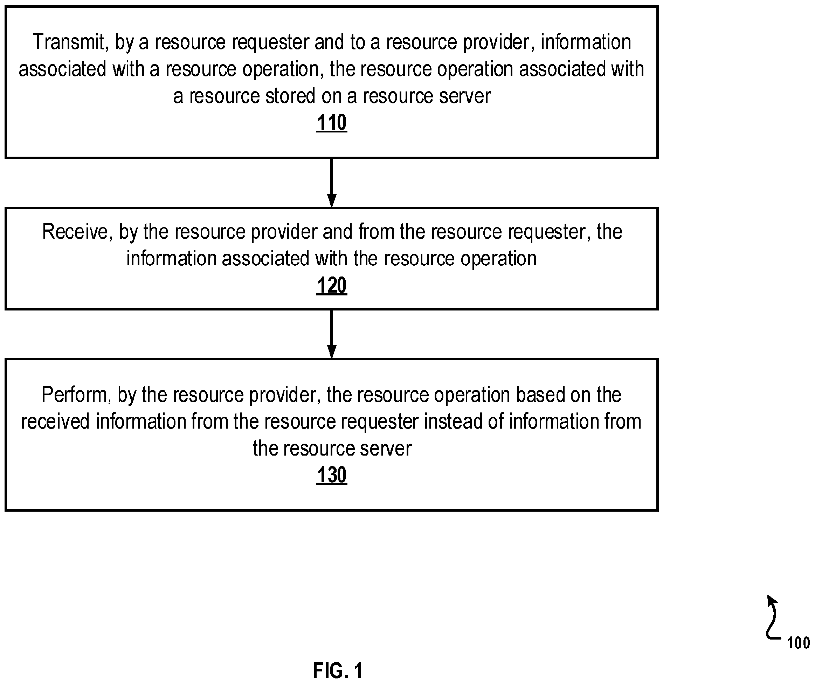

FIG. 1 is a flowchart illustrating an example of a computer-implemented method 100 for secure offline resource operations, according to an implementation of the present disclosure. For clarity of presentation, the description that follows generally describes method 100 in the context of the other figures in this description. However, it will be understood that method 100 can be performed, for example, by any system, environment, software, and hardware, or a combination of systems, environments, software, and hardware, as appropriate. In some implementations, various steps of method 100 can be run in parallel, in combination, in loops, or in any order.

At 110, a resource requester transmits information associated with a resource operation to a resource provider. The resource operation is associated with a resource stored on a resource server. The resource includes material that can be allocated or consumed, or a right to the material. For purposes of example, the resource in the present disclosure refers to a gate passage right when a user is traveling by a taxi, a bus, a subway, or a train. For example, when a user is taking a subway, the user can use a user device (such as, a mobile phone) to transmit a message to a gate control machine (such as, a turnstile in a subway station) requesting to pass the gate. In this example, the user device is the resource requester, the gate control machine is the resource provider, the message includes the information associated with the resource operation, and the resource operation is for applying the user's right to take the subway. In some implementations, the resource server is offline (such as, the user device is not connected to the resource server, the gate control machine is not connected to the resource server) when the user is requesting to pass the gate. In general, the user is a legal owner of the user device. The user can use a message function of the user device or an application installed on the user device to transmit the message.

In some implementations, the information includes authorization information, associated with the resource operation, generated by the resource requester. In some implementations, the authorization information includes at least one of identification information of the user (such as, a cell phone number, an account number registered with an application installed on the user device, a user ID number) or a time stamp of the authorization information (such as, when the authorization information is generated). The authorization information can provide security when performing a resource operation. For example, when a resource operation is unauthorized by a user, the user can submit an alibi at the time of authorization to prove that the resource operation is not authorized by the user.

In some implementations, to prevent abuse of the offline resource operations, the information can include verification information. The verification information is received from a third-party (such as, the resource server). For example, before transmitting the information associated with the resource operation to the resource provider, the resource requester receives the verification information from the resource server. In some implementations, the verification information includes an actual balance or a credit balance the user has on the resource server. In some implementations, before transmitting the information associated with the resource operation to the resource provider, the resource requester determines a time stamp of the last received verification information. If a current time exceeds the time represented by the time stamp by a predefined time period (such as, one day), the resource requester requests verification information again from the resource server. In response to the request, the resource server transmits the requested verification information to the resource requester if the resource requester has an actual balance or a credit balance that exceeds a predefined number. If the resource requester has an actual balance or a credit balance that is less than or equal to the predefined number, the resource server transmits a verification information failure to the resource requester.

In some implementations, the resource requester can generate an image pattern based on at least one of the authorization information or the verification information. Instead of transmitting the information associated with the resource operation to the resource provider, the resource requester can display the image pattern for the resource provider to read using, for example, a code reader. In some implementations, the image pattern includes at least one of a bar code or a QR code. From 110, method 100 proceeds to 120.

At 120, the resource provider receives the information associated with the resource operation from the resource requester. The resource provider (such as, a gate control machine) is operated by a merchant (such as, a company that manages and maintains the gate control machine). For example, a gate control machine includes a receiver that receives information. The receiver can be a wireless communication unit, a camera, or a code reader. From 110, method 100 proceeds to 130.

At 130, the resource provider performs the resource operation based on the received information from the resource requester, instead of information from the resource server. For example, when receiving the authorization information from a user device, a merchant of a gate control machine allows the legal user of the user device to pass the gate. In other words, the gate control machine allocates a gate passage right based on the information received from the user device. In some implementations, the resource provider performs the resource operation based on verification information. If the resource requester fails to transmit the verification information to the resource provider (such as, the resource server transmits a verification information failure to the resource requester), the resource provider will not perform the resource operation. In some implementations, after 130, the resource provider transmits an operation result associated with the resource operation to the resource requester. After 130, method 100 stops.

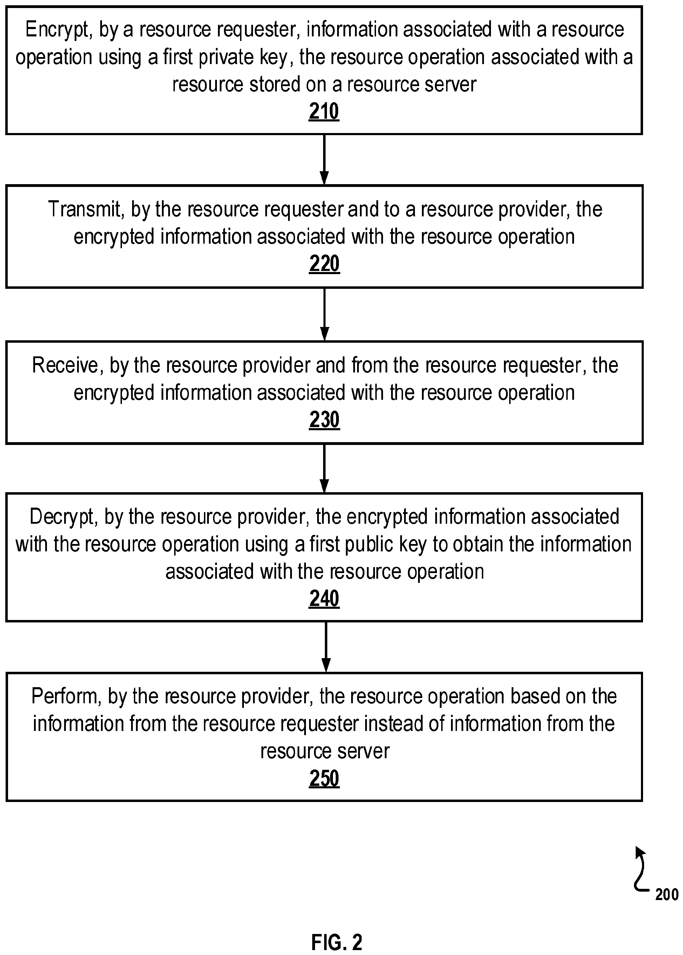

FIG. 2 is a flowchart illustrating another example of a computer-implemented method 200 for secure offline resource operations, according to an implementation of the present disclosure. For clarity of presentation, the description that follows generally describes method 200 in the context of the other figures in this description. However, it will be understood that method 200 can be performed, for example, by any system, environment, software, and hardware, or a combination of systems, environments, software, and hardware, as appropriate. In some implementations, various steps of method 200 can be run in parallel, in combination, in loops, or in any order.

At 210, a resource requester encrypts information associated with a resource operation using a first private key. The resource operation is associated with a resource stored on a resource server. To protect privacy, the information associated with the resource operation is encrypted with the first private key. The encrypted information can only be decrypted using a first public key. The first private key and the first public key are a first pair of asymmetrical and mutually matched keys. A pair of asymmetrical and mutually matched keys can be generated using an algorithm including RSA, ELGAMAL, KNAPSACK, RABIN, D-H, and ECC (elliptic curve cryptography). In some implementations, the first private key and the first public key are generated by a third-party device (such as, the resource server). For example, the resource server transmits the first private key and the first public key to the resource requester and the resource provider, respectively. In some implementations, when the first private key and the first public key have been used for more than a predefined time period (such as, one day), the resource server can update the first private key and the first public key (for example, by generating a new pair of private and public keys). From 210, method 200 proceeds to 220.

At 220, the resource requester transmits the encrypted information associated with the resource operation to the resource provider. In some implementations, the resource server is offline (such as, the resource requester is not connected to the resource server, the resource provider is not connected to the resource server) when performing the resource operation.

In some implementations, the information includes authorization information, associated with the resource operation, generated by the resource requester. In some implementations, the authorization information includes at least one of identification information of the user (such as, a cell phone number, an account number registered with an application installed on the user device, a user ID number) or a time stamp of the authorization information (such as, when the authorization information is generated). The authorization information can provide security when performing a resource operation. For example, when a resource operation is unauthorized by a user, the user can submit an alibi at the time of authorization to prove that the resource operation is not authorized by the user.

In some implementations, to prevent abuse of the offline resource operations, the information can include verification information. The verification information is received from a third-party device (such as, the resource server). For example, before transmitting the information associated with the resource operation to the resource provider, the resource requester receives the verification information from the resource server. In some implementations, the verification information includes an actual balance or a credit balance the user has on the resource server. In some implementations, before transmitting the information associated with the resource operation to the resource provider, the resource requester determines a time stamp of the last received verification information. If a current time exceeds the time represented by the time stamp by a predefined time period (such as, one day), the resource requester requests another verification information from the resource server. In response to the request, the resource server transmits the another verification information to the resource requester if the resource requester has an actual balance or a credit balance that exceeds a predefined number. If the resource requester has an actual balance or a credit balance that is less than or equal to the predefined number, the resource server transmits a verification information failure to the resource requester. From 220, method 100 proceeds to 230.

At 230, the resource provider receives the encrypted information associated with the resource operation from the resource requester. The resource provider includes a receiver that receives information. The receiver can be a wireless communication unit, a camera, or a code reader. From 230, method 200 proceeds to 240.

At 240, the resource provider decrypts the received encrypted information associated with the resource operation using the first public key to obtain the information associated with the resource operation. In some implementations, the first public key is encrypted using a second private key. The encrypted first public key can only be decrypted using a second public key. The second private key and the second public key are a second pair of asymmetrical and mutually matched keys, generated using an algorithm including RSA, ELGAMAL, KNAPSACK algorithm, RABIN, D-H, and ECC (elliptic curve cryptography). In some implementations, the second private key and the second public key are generated by a third-party device (such as, the resource server). For example, the resource server transmits the first private key and the encrypted first public key to the resource requester. The resource requester transmits the encrypted first public key to the resource requester. In addition, the resource server transmits the second public key to the resource provider. As a result, the resource provider can decrypt the encrypted first public key using the second public key to obtain the first public key. In some implementations, when the second private key and the second public key have been used for more than a predefined time period (such as, one day), the resource server can update the second private key and the second public key (for example, by generating a new pair of private and public keys). From 240, method 200 proceeds to 250.

At 250, the resource provider performs the resource operation based on the information from the resource requester, instead of information from the resource server. For example, when receiving the authorization information from a user device, a merchant of a gate control machine allows the legal user of the user device to pass the gate. In other words, the gate control machine allocates a gate passage right based on the information received from the user device. In some implementations, the resource provider performs the resource operation based on verification information. If the resource requester fails to transmit the verification information to the resource provider (such as, the resource server transmits a verification information failure to the resource requester), the resource provider will not perform the resource operation. In some implementations, after 250, the resource provider transmits an operation result associated with the resource operation to the resource requester. After 250, method 200 stops.

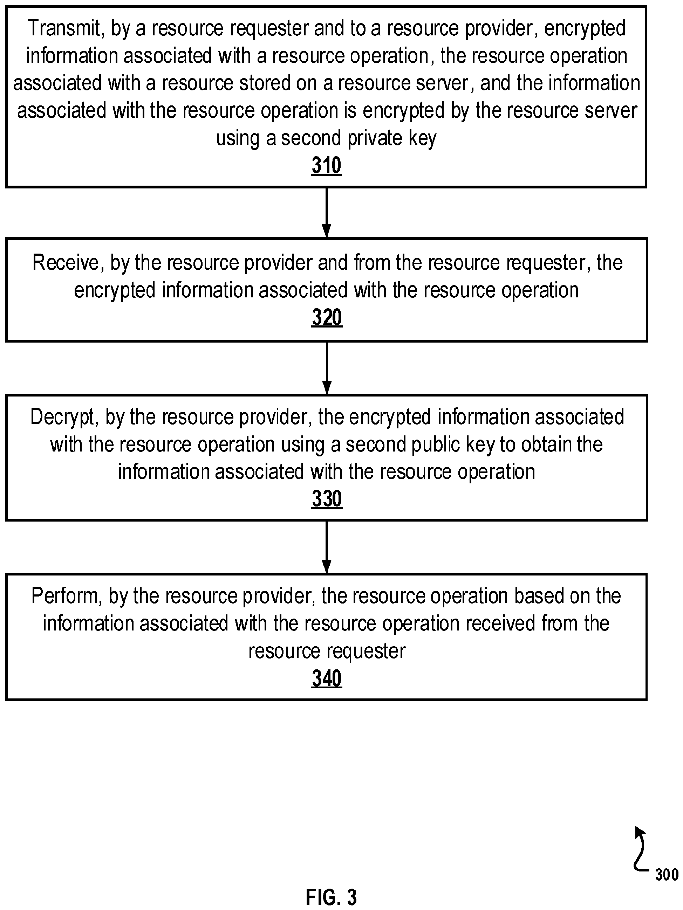

FIG. 3 is a flowchart illustrating a third example of a computer-implemented method 300 for secure offline resource operations, according to an implementation of the present disclosure. For clarity of presentation, the description that follows generally describes method 300 in the context of the other figures in this description. However, it will be understood that method 300 can be performed, for example, by any system, environment, software, and hardware, or a combination of systems, environments, software, and hardware, as appropriate. In some implementations, various steps of method 300 can be run in parallel, in combination, in loops, or in any order.

At 310, a resource requester transmits encrypted information associated with a resource operation to a resource provider. The resource operation is associated with a resource stored on a resource server. The information associated with the resource operation is encrypted by, for example, the resource server using a second private key. The encrypted information can only be decrypted using a second public key. The second private key and the second public key are a second pair of asymmetrical and mutually matched keys, generated using an algorithm including RSA, ELGAMAL, KNAPSACK algorithm, RABIN, D-H, and ECC (elliptic curve cryptography). In some implementations, the second private key and the second public key are generated by a third-party device (such as, the resource server). In some implementations, when the second private key and the second public key have been used for more than a predefined time period (such as, one day), the resource server can update the second private key and the second public key, for example, by generating a new pair of private and public keys. In some implementations, the information includes verification information. The verification information includes an actual balance or a credit balance the resource requester has on the resource server. From 310, method 300 proceeds to 320.

At 320, the resource provider receives the encrypted information associated with the resource operation from the resource requester. The resource provider includes a receiver that receives information. The receiver can be a wireless communication unit, a camera, or a code reader. From 320, method 300 proceeds to 330.

At 330, the resource provider decrypts the received encrypted information associated with the resource operation using the second public key to obtain the information associated with the resource operation. In some implementations, the resource provider receives the second public key from a third-party device (such as, the resource server). From 330, method 300 proceeds to 340.

At 340, the resource provider performs the resource operation based on the information associated with the resource operation received from the resource requester. In some implementations, the resource provider performs the resource operation based on received verification information. If the resource requester fails to transmit the verification information to the resource provider (such as, the resource requester has an actual balance or a credit balance that is less than or equal to a predefined number on the resource server), the resource provider will not perform the resource operation.

In some implementations, after 340, the resource provider transmits an operation result associated with the resource operation to the resource requester. In some implementations, the resource provider aggregates resource operation results in a predefined period (such as, one day). For example, after allowing 1000 people to pass, a gate control machine (that is, the resource provider) encrypts the resource operation results (that is, 1000 people have passed the gate) using, for example, the second public key. The resource provider transmits the encrypted resource operation results to the resource server. After receiving the encrypted resource operation results, the resource server decrypts the encrypted resource operation results using, for example, the second private key to obtain the resource operation results. Based on the resource operation results, the resource server pays the merchant that manages and maintains the gate control machine, and deducts corresponding amounts from corresponding accounts associated with the resource operation results. After 340, method 300 stops.

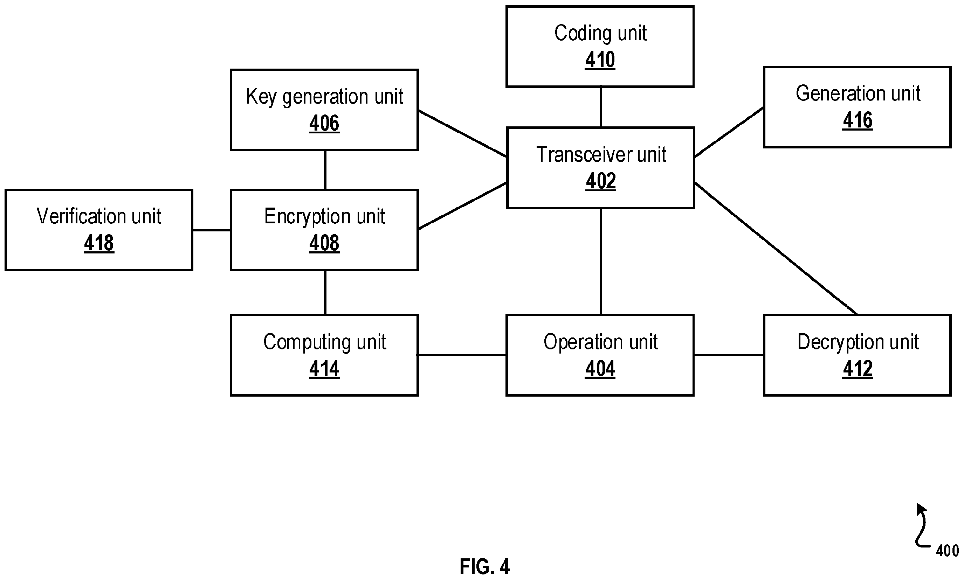

FIG. 4 is a block diagram illustrating an example of a data processing system 400 for secure offline resource operations, according to an implementation of the present disclosure. For clarity of presentation, the description that follows generally describes system 400 in the context of the other figures in this description. The system 400 can include a transceiver unit 402, an operation unit 404, a key generation unit 406, an encryption unit 408, a coding unit 410, a decryption unit 412, a computing unit 414, a generation unit 416, and a verification unit 418, which can be implemented in hardware, software, or both. In some implementations, the system 400 can include additional or different (or a combination of both) components not shown in the block diagram. In some implementations, components can also be omitted from the system 400.

The transceiver unit 402 can, for example, transmit or receive authorization information, verification information, a private key, or a public key, as discussed in FIGS. 1-3. The operation unit 404 can, for example, perform a resource operation, as discussed in FIGS. 1-3. The key generation unit 406 can, for example, generate a pair of private and public keys, as discussed in FIGS. 2-3. The encryption unit 408 can, for example, encrypt information using a private key or a public key, as discussed in FIGS. 2-3. The coding unit 410 can, for example, generate an image pattern, as discussed in FIG. 1. The decryption unit 412 can, for example, decrypt encrypted information using a private key or a public key, as discussed in FIGS. 2-3. The computing unit 414 can, for example, aggregate resource operation results in a predefined period, as discussed in FIG. 3. The generation unit 416 can, for example, generate authorization information, as discussed in FIGS. 1-2. The verification unit 418 can, for example, generate verification information, as discussed in FIGS. 1-3.

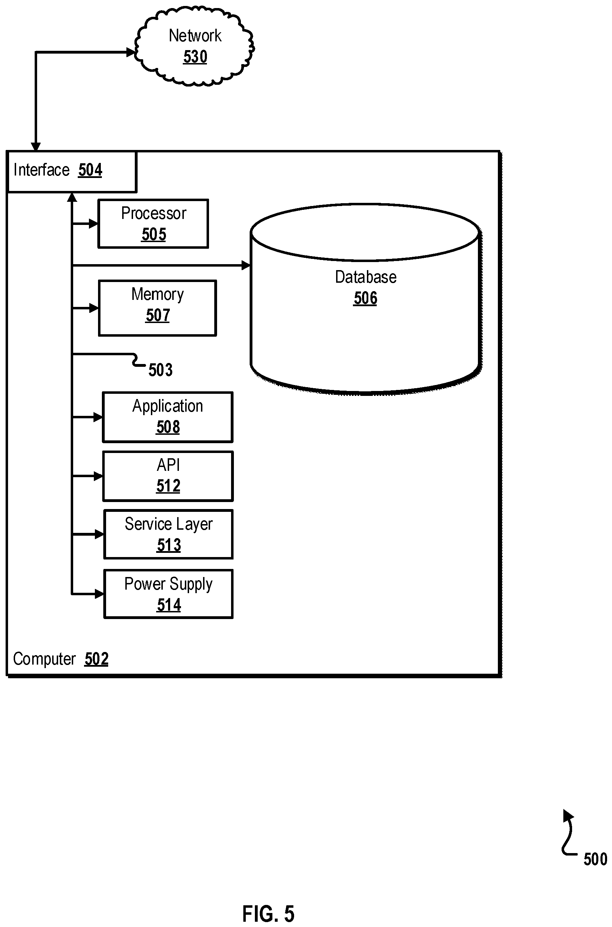

FIG. 5 is a block diagram illustrating an example of a computer-implemented System 500 used to provide computational functionalities associated with described algorithms, methods, functions, processes, flows, and procedures, according to an implementation of the present disclosure. In the illustrated implementation, System 500 includes a Computer 502 and a Network 530.

The illustrated Computer 502 is intended to encompass any computing device such as a server, desktop computer, laptop/notebook computer, wireless data port, smart phone, personal data assistant (PDA), tablet computer, one or more processors within these devices, another computing device, or a combination of computing devices, including physical or virtual instances of the computing device, or a combination of physical or virtual instances of the computing device. Additionally, the Computer 502 can include an input device, such as a keypad, keyboard, touch screen, another input device, or a combination of input devices that can accept user information, and an output device that conveys information associated with the operation of the Computer 502, including digital data, visual, audio, another type of information, or a combination of types of information, on a graphical-type user interface (UI) (or GUI) or other UI.

The Computer 502 can serve in a role in a distributed computing system as a client, network component, a server, a database or another persistency, another role, or a combination of roles for performing the subject matter described in the present disclosure. The illustrated Computer 502 is communicably coupled with a Network 530. In some implementations, one or more components of the Computer 502 can be configured to operate within an environment, including cloud-computing-based, local, global, another environment, or a combination of environments.

At a high level, the Computer 502 is an electronic computing device operable to receive, transmit, process, store, or manage data and information associated with the described subject matter. According to some implementations, the Computer 502 can also include or be communicably coupled with a server, including an application server, e-mail server, web server, caching server, streaming data server, another server, or a combination of servers.

The Computer 502 can receive requests over Network 530 (for example, from a client software application executing on another Computer 502) and respond to the received requests by processing the received requests using a software application or a combination of software applications. In addition, requests can also be sent to the Computer 502 from internal users (for example, from a command console or by another internal access method), external or third-parties, or other entities, individuals, systems, or computers.

Each of the components of the Computer 502 can communicate using a System Bus 503. In some implementations, any or all of the components of the Computer 502, including hardware, software, or a combination of hardware and software, can interface over the System Bus 503 using an application programming interface (API) 512, a Service Layer 513, or a combination of the API 512 and Service Layer 513. The API 512 can include specifications for routines, data structures, and object classes. The API 512 can be either computer-language independent or dependent and refer to a complete interface, a single function, or even a set of APIs. The Service Layer 513 provides software services to the Computer 502 or other components (whether illustrated or not) that are communicably coupled to the Computer 502. The functionality of the Computer 502 can be accessible for all service consumers using the Service Layer 513. Software services, such as those provided by the Service Layer 513, provide reusable, defined functionalities through a defined interface. For example, the interface can be software written in JAVA, C++, another computing language, or a combination of computing languages providing data in extensible markup language (XML) format, another format, or a combination of formats. While illustrated as an integrated component of the Computer 502, alternative implementations can illustrate the API 512 or the Service Layer 513 as stand-alone components in relation to other components of the Computer 502 or other components (whether illustrated or not) that are communicably coupled to the Computer 502. Moreover, any or all parts of the API 512 or the Service Layer 513 can be implemented as a child or a sub-module of another software module, enterprise application, or hardware module.

The Computer 502 includes an Interface 504. Although illustrated as a single Interface 504, two or more Interfaces 504 can be used according to particular needs, desires, or particular implementations of the Computer 502. The Interface 504 is used by the Computer 502 for communicating with another computing system (whether illustrated or not) that is communicatively linked to the Network 530 in a distributed environment. Generally, the Interface 504 is operable to communicate with the Network 530 and includes logic encoded in software, hardware, or a combination of software and hardware. More specifically, the Interface 504 can include software supporting one or more communication protocols associated with communications such that the Network 530 or hardware of Interface 504 is operable to communicate physical signals within and outside of the illustrated Computer 502.

The Computer 502 includes a Processor 505. Although illustrated as a single Processor 505, two or more Processors 505 can be used according to particular needs, desires, or particular implementations of the Computer 502. Generally, the Processor 505 executes instructions and manipulates data to perform the operations of the Computer 502 and any algorithms, methods, functions, processes, flows, and procedures as described in the present disclosure.

The Computer 502 also includes a Database 506 that can hold data for the Computer 502, another component communicatively linked to the Network 530 (whether illustrated or not), or a combination of the Computer 502 and another component. For example, Database 506 can be an in-memory, conventional, or another type of database storing data consistent with the present disclosure. In some implementations, Database 506 can be a combination of two or more different database types (for example, a hybrid in-memory and conventional database) according to particular needs, desires, or particular implementations of the Computer 502 and the described functionality. Although illustrated as a single Database 506, two or more databases of similar or differing types can be used according to particular needs, desires, or particular implementations of the Computer 502 and the described functionality. While Database 506 is illustrated as an integral component of the Computer 502, in alternative implementations, Database 506 can be external to the Computer 502.

The Computer 502 also includes a Memory 507 that can hold data for the Computer 502, another component or components communicatively linked to the Network 530 (whether illustrated or not), or a combination of the Computer 502 and another component. Memory 507 can store any data consistent with the present disclosure. In some implementations, Memory 507 can be a combination of two or more different types of memory (for example, a combination of semiconductor and magnetic storage) according to particular needs, desires, or particular implementations of the Computer 502 and the described functionality. Although illustrated as a single Memory 507, two or more Memories 507 or similar or differing types can be used according to particular needs, desires, or particular implementations of the Computer 502 and the described functionality. While Memory 507 is illustrated as an integral component of the Computer 502, in alternative implementations, Memory 507 can be external to the Computer 502.

The Application 508 is an algorithmic software engine providing functionality according to particular needs, desires, or particular implementations of the Computer 502, particularly with respect to functionality described in the present disclosure. For example, Application 508 can serve as one or more components, modules, or applications. Further, although illustrated as a single Application 508, the Application 508 can be implemented as multiple Applications 508 on the Computer 502. In addition, although illustrated as integral to the Computer 502, in alternative implementations, the Application 508 can be external to the Computer 502.

The Computer 502 can also include a Power Supply 514. The Power Supply 514 can include a rechargeable or non-rechargeable battery that can be configured to be either user- or non-user-replaceable. In some implementations, the Power Supply 514 can include power-conversion or management circuits (including recharging, standby, or another power management functionality). In some implementations, the Power Supply 514 can include a power plug to allow the Computer 502 to be plugged into a wall socket or another power source to, for example, power the Computer 502 or recharge a rechargeable battery.

There can be any number of Computers 502 associated with, or external to, a computer system containing Computer 502, each Computer 502 communicating over Network 530. Further, the term "client," "user," or other appropriate terminology can be used interchangeably, as appropriate. Moreover, the present disclosure contemplates that many users can use one Computer 502, or that one user can use multiple computers 502.

Described implementations of the subject matter can include one or more features, alone or in combination.

For example, in a first implementation, a computer-implemented method, comprising: transmitting, by a resource requester and to a resource provider, information associated with a resource operation, wherein the resource operation is associated with a resource stored on a resource server; receiving, by the resource provider and from the resource requester, the information associated with the resource operation; and performing, by the resource provider, the resource operation based on the received information from the resource requester instead of information from the resource server.

The foregoing and other described implementations can each, optionally, include one or more of the following features:

A first feature, combinable with any of the following features, wherein the information associated with the resource operation includes at least one of authorization information generated by the resource requester or verification information generated by the resource server.

A second feature, combinable with any of the previous or following features, wherein the authorization information is encrypted by the resource requester using a first private key before transmitting to the resource provider, the received authorization information is decrypted by the resource provider using a first public key before performing the resource operation, and the first private key and the first public key are a first pair of asymmetrical and mutually matched keys.

A third feature, combinable with any of the previous or following features, wherein the authorization information includes at least one of user identification information of the resource requester and a time stamp associated with the authorization information.

A fourth feature, combinable with any of the previous or following features, further comprising: encrypting, by the resource requester, the first public key using a second private key; transmitting, by the resource requester and to the resource provider, the encrypted first public key; receiving, by the resource provider and from the resource requester, the encrypted first public key; and decrypting, by the resource provider, the received encrypted first public key using a second public key, wherein the second private key and the second public key are a second pair of asymmetrical and mutually matched keys.

A fifth feature, combinable with any of the previous or following features, wherein the verification information is encrypted by the resource server using a third private key, the received verification information is decrypted by the resource provider using a third public key before performing the resource operation, and the third private key and the third public key are a third pair of asymmetrical and mutually matched keys.

A sixth feature, combinable with any of the previous or following features, further comprising generating an image pattern based on at least one of the authorization information or the verification information, wherein the image pattern includes at least one of a bar code or a QR code.

A seventh feature, combinable with any of the previous or following features, wherein performing the resource operation includes allocating a gate passage right to the resource requester.

In a second implementation, a non-transitory, computer-readable medium storing one or more instructions executable by a computer system to perform operations comprising: transmitting, by a resource requester and to a resource provider, information associated with a resource operation, wherein the resource operation is associated with a resource stored on a resource server; receiving, by the resource provider and from the resource requester, the information associated with the resource operation; and performing, by the resource provider, the resource operation based on the received information from the resource requester instead of information from the resource server.

The foregoing and other described implementations can each, optionally, include one or more of the following features:

A first feature, combinable with any of the following features, wherein the information associated with the resource operation includes at least one of authorization information generated by the resource requester or verification information generated by the resource server.

A second feature, combinable with any of the previous or following features, wherein the authorization information is encrypted by the resource requester using a first private key before transmitting to the resource provider, the received authorization information is decrypted by the resource provider using a first public key before performing the resource operation, and the first private key and the first public key are a first pair of asymmetrical and mutually matched keys.

A third feature, combinable with any of the previous or following features, wherein the authorization information includes at least one of user identification information of the resource requester and a time stamp associated with the authorization information.

A fourth feature, combinable with any of the previous or following features, the operations further comprising: encrypting, by the resource requester, the first public key using a second private key; transmitting, by the resource requester and to the resource provider, the encrypted first public key; receiving, by the resource provider and from the resource requester, the encrypted first public key; and decrypting, by the resource provider, the received encrypted first public key using a second public key, wherein the second private key and the second public key are a second pair of asymmetrical and mutually matched keys.

A fifth feature, combinable with any of the previous or following features, wherein the verification information is encrypted by the resource server using a third private key, the received verification information is decrypted by the resource provider using a third public key before performing the resource operation, and the third private key and the third public key are a third pair of asymmetrical and mutually matched keys.

A sixth feature, combinable with any of the previous or following features, the operations further comprising generating an image pattern based on at least one of the authorization information or the verification information, wherein the image pattern includes at least one of a bar code or a QR code.

A seventh feature, combinable with any of the previous or following features, wherein performing the resource operation includes allocating a gate passage right to the resource requester.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising: transmitting, by a resource requester and to a resource provider, information associated with a resource operation, wherein the resource operation is associated with a resource stored on a resource server; receiving, by the resource provider and from the resource requester, the information associated with the resource operation; and performing, by the resource provider, the resource operation based on the received information from the resource requester instead of information from the resource server.

The foregoing and other described implementations can each, optionally, include one or more of the following features:

A first feature, combinable with any of the following features, wherein the information associated with the resource operation includes at least one of authorization information generated by the resource requester or verification information generated by the resource server.

A second feature, combinable with any of the previous or following features, wherein the authorization information is encrypted by the resource requester using a first private key before transmitting to the resource provider, the received authorization information is decrypted by the resource provider using a first public key before performing the resource operation, and the first private key and the first public key are a first pair of asymmetrical and mutually matched keys.

A third feature, combinable with any of the previous or following features, wherein the authorization information includes at least one of user identification information of the resource requester and a time stamp associated with the authorization information.

A fourth feature, combinable with any of the previous or following features, the operations further comprising: encrypting, by the resource requester, the first public key using a second private key; transmitting, by the resource requester and to the resource provider, the encrypted first public key; receiving, by the resource provider and from the resource requester, the encrypted first public key; and decrypting, by the resource provider, the received encrypted first public key using a second public key, wherein the second private key and the second public key are a second pair of asymmetrical and mutually matched keys.

A fifth feature, combinable with any of the previous or following features, wherein the verification information is encrypted by the resource server using a third private key, the received verification information is decrypted by the resource provider using a third public key before performing the resource operation, and the third private key and the third public key are a third pair of asymmetrical and mutually matched keys.

A sixth feature, combinable with any of the previous or following features, the operations further comprising generating an image pattern based on at least one of the authorization information or the verification information, wherein the image pattern includes at least one of a bar code or a QR code.

A seventh feature, combinable with any of the previous or following features, wherein performing the resource operation includes allocating a gate passage right to the resource requester.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," or "electronic computer device" (or an equivalent term as understood by one of ordinary skill in the art) refer to data processing hardware and encompass all kinds of apparatus, devices, and machines for processing data, including by way of example, a programmable processor, a computer, or multiple processors or computers. The computer can also be, or further include special purpose logic circuitry, for example, a central processing unit (CPU), an FPGA (field programmable gate array), or an ASIC (application-specific integrated circuit). In some implementations, the computer or computer-implemented system or special purpose logic circuitry (or a combination of the computer or computer-implemented system and special purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system of some type, for example LINUX, UNIX, WINDOWS, MAC OS, ANDROID, IOS, another operating system, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations. The described methods, processes, or logic flows can be performed by one or more programmable computers executing one or more computer programs to perform functions by operating on input data and generating output data. The methods, processes, or logic flows can also be performed by, and computers can also be implemented as, special purpose logic circuitry, for example, a CPU, an FPGA, or an ASIC.

Computers for the execution of a computer program can be based on general or special purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device.

Non-transitory computer-readable media for storing computer program instructions and data can include all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special purpose logic circuitry.

To provide for interaction with a user, implementations of the subject matter described in this specification can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity, a multi-touch screen using capacitive or electric sensing, or another type of touchscreen. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface," or "GUI," can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.1 lx and 802.20 or other protocols consistent with the present disclosure), all or a portion of the Internet, another communication network, or a combination of communication networks. The communication network can communicate with, for example, Internet Protocol (IP) packets, Frame Relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method (100), comprising:
encrypting, by a resource requester, a first public key using a second private key;
transmitting, by the resource requester and to a resource provider, the encrypted first public key;
receiving, by the resource provider and from the resource requester, the encrypted first public key;
decrypting, by the resource provider, the received encrypted first public key using a second public key, wherein the second private key and the second public key are a second pair of asymmetrical and mutually matched keys generated by a resource server, wherein the first private key and the encrypted first public are transmitted to the resource requester by the resource server and wherein the second public key is transmitted to the resource provider by the resource server so that the resource provider can decrypt the encrypted first public key using the second public key to obtain the first public key; and
determining, by the resource requester, a time stamp of a last received verification information, and in response to determining that a current time exceeds the time represented by the time stamp by a predefined time:
requesting, by the resource requester, another verification information from the resource server,
transmitting, by the resource server, the another verification information to the resource requester if the resource requester has an actual balance or a credit balance that exceeds a predefined number,
transmitting (110, 220), by the resource requester and to the resource provider, information associated with a resource operation, wherein the resource operation is associated with a resource stored on a resource server, wherein the information associated with the resource operation comprises authorization information generated by the resource requester and the another verification information, wherein the authorization information provides security when performing a resource operation, wherein the authorization information is encrypted (210) by the resource requester using the first private key before transmitting (110, 220) to the resource provider, and wherein the another verification information is encrypted by the resource server using a third private key, the received verification information being decrypted by the resource provider using a third public key before performing the resource operation, and the third private key and the third public key being a third pair of asymmetrical and mutually matched keys generated by the resource server,
receiving (120, 230), by the resource provider and from the resource requester, the information associated with the resource operation, the information comprising the authorization information and the another verification information, the authorization information including at least one of user identification of the resource requester and a time stamp associated with the authorization information, wherein the received authorization information is decrypted (240) by the resource provider using the first public key before performing (130, 250) the resource operation, wherein the first private key and the first public key are a first pair of asymmetrical and mutually matched keys generated by the resource server, and wherein, when the first private key and the first public key are used for more than a first predefined time period, updating, by the resource server, the first private key and the first public key by generating a new pair of private and public keys, and
performing (130, 250), by the resource provider, the resource operation based on the received information from the resource requester instead of information from the resource server.

2. The method of claim 1, further comprising generating an image pattern based on at least one of the authorization information or the verification information, wherein the image pattern includes at least one of a bar code or a QR code.

3. The method of claim 1, wherein performing the resource operation includes allocating a gate passage right to the resource requester.

4. The method of any one of claims 1 to 3, further comprising:
when the second private key and the second public key are used for more than a second predefined time period, updating, by the resource serve, the second public key and the second private key by generating a new pair of private and public keys.

5. A non-transitory, computer-readable medium storing one or more instructions executable by a computer system to perform operations according to any one of the methods of claims 1 to 4.

6. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations according to any one of the methods of claim 1 to 4.

## Patentansprüche

1. Computerimplementiertes Verfahren (100), das Folgendes umfasst:
Verschlüsseln durch eine Betriebsmittel-Anforderungseinrichtung eines ersten öffentlichen Schlüssels unter Verwendung eines zweiten privaten Schlüssels;
Senden durch die Betriebsmittel-Anforderungseinrichtung des verschlüsselten ersten öffentlichen Schlüssels zu einem Betriebsmittelanbieter;
Empfangen durch den Betriebsmittelanbieter und von der Betriebsmittel-Anforderungseinrichtung des verschlüsselten ersten öffentlichen Schlüssels;
Entschlüsseln durch den Betriebsmittelanbieter des empfangenen verschlüsselten ersten öffentlichen Schlüssels unter Verwendung eines zweiten öffentlichen Schlüssels, wobei der zweite private Schlüssel und der zweite öffentliche Schlüssel ein zweites Paar asymmetrischer und zusammenpassender Schlüssel sind, die durch einen Betriebsmittel-Server erzeugt werden, wobei der erste private Schlüssel und der verschlüsselte erste öffentliche Schlüssel durch den Betriebsmittel-Server zu der Betriebsmittel-Anforderungseinrichtung gesendet werden und wobei der zweite öffentliche Schlüssel durch den Betriebsmittel-Server zu dem Betriebsmittelanbieter gesendet wird, so dass der Betriebsmittelanbieter den verschlüsselten ersten öffentlichen Schlüssel unter Verwendung des zweiten öffentlichen Schlüssels entschlüsseln kann, um den ersten öffentlichen Schlüssel zu erhalten; und
Bestimmen durch die Betriebsmittel-Anforderungseinrichtung eines Zeitstempels zuletzt empfangener Verifizierungsinformationen und in Reaktion auf die Bestimmung, dass eine aktuelle Zeit die durch den Zeitstempel repräsentierte Zeit um eine im Voraus definierte Zeit überschreitet:
Anfordern durch die Betriebsmittel-Anforderungseinrichtung weiterer Verifizierungsinformationen von dem Betriebsmittel-Server,
Senden durch den Betriebsmittel-Server der weiteren Verifizierungsinformationen zu der Betriebsmittel-Anforderungseinrichtung, falls die Betriebsmittel-Anforderungseinrichtung einen Effektivbestand oder einen Überschuss besitzt, der eine im Voraus definierte Zahl überschreitet,
Senden (110, 220) durch die Betriebsmittel-Anforderungseinrichtung zu dem Betriebsmittelanbieter von Informationen, die einer Betriebsmitteloperation zugeordnet sind, wobei die Betriebsmitteloperation einem in einem Betriebsmittel-Server gespeicherten Betriebsmittel zugeordnet ist, wobei die der Betriebsmitteloperation zugeordneten Informationen Autorisierungsinformationen, die durch die Betriebsmittel-Anforderungseinrichtung erzeugt werden, und die weiteren Verifizierungsinformationen enthalten, wobei die Autorisierungsinformationen Sicherheit bereitstellen, wenn eine Betriebsmitteloperation ausgeführt wird, wobei die Autorisierungsinformationen durch die Betriebsmittel-Anforderungseinrichtung unter Verwendung des ersten privaten Schlüssel verschlüsselt werden (210), bevor sie zu dem Betriebsmittelanbieter gesendet werden (110, 220), und wobei die weiteren Verifizierungsinformationen durch den Betriebsmittel-Server unter Verwendung eines dritten privaten Schlüssels verschlüsselt werden, wobei die empfangenen Verifizierungsinformationen durch den Betriebsmittelanbieter unter Verwendung eines dritten öffentlichen Schlüssels entschlüsselt werden, bevor die Betriebsmitteloperation ausgeführt wird, und wobei der dritte private Schlüssel und der dritte öffentliche Schlüssel ein drittes Paar asymmetrischer und zusammenpassender Schlüssel sind, die durch den Betriebsmittel-Server erzeugt werden,
Empfangen (120, 230) durch den Betriebsmittelanbieter und von der Betriebsmittel-Anforderungseinrichtung der der Betriebsmitteloperation zugeordneten Informationen, wobei die Informationen die Autorisierungsinformationen und die weiteren Verifizierungsinformationen enthalten, wobei die Autorisierungsinformationen eine Anwenderkennung der Betriebsmittel-Anforderungseinrichtung und/oder einen den Autorisierungsinformationen zugeordneten Zeitstempel enthalten, wobei die empfangenen Autorisierungsinformationen durch den Betriebsmittelanbieter unter Verwendung des ersten öffentlichen Schlüssels entschlüsselt werden (240), bevor die Betriebsmitteloperation ausgeführt wird (130, 250), wobei der erste private Schlüssel und der erste öffentliche Schlüssel ein erstes Paar asymmetrischer und zusammenpassender Schlüssel sind, die durch den Betriebsmittel-Server erzeugt werden, und wobei der Betriebsmittel-Server dann, wenn der erste private Schlüssel und der erste öffentliche Schlüssel länger als für eine erste im Voraus definierte Zeitdauer verwendet werden, den ersten privaten Schlüssel und den ersten öffentlichen Schlüssel durch Erzeugen eines neuen Paars eines privaten und eines öffentlichen Schlüssels aktualisiert, und
Ausführen (130, 250) durch den Betriebsmittelanbieter der Betriebsmitteloperation anhand der empfangenen Informationen von der Betriebsmittel-Anforderungseinrichtung statt der Informationen von dem Betriebsmittel-Server.

2. Verfahren nach Anspruch 1, das ferner das Erzeugen eines Bildmusters anhand der Autorisierungsinformationen und/oder der Verifizierungsinformationen umfasst, wobei das Bildmuster einen Strichcode und/oder einen QR-Code umfasst.

3. Verfahren nach Anspruch 1, wobei das Ausführen der Betriebsmitteloperation das Zuweisen eines Rechts zum Passieren einer Sperre zu der Betriebsmittel-Anforderungseinrichtung umfasst.

4. Verfahren nach einem der Ansprüche 1 bis 3, das ferner Folgendes umfasst:
Aktualisieren dann, wenn der zweite private Schlüssel und der zweite öffentliche Schlüssel länger als für eine zweite im Voraus definierte Zeitdauer verwendet werden, des zweiten öffentlichen Schlüssels und des zweiten privaten Schlüssels durch den Betriebsmittel-Server durch Erzeugen eines neuen Paars aus einem privaten und einem öffentlichen Schlüssel.

5. Nicht transitorisches computerlesbares Medium, das einen oder mehrere Befehle speichert, die durch ein Computersystem ausführbar sind, um Operationen gemäß einem der Verfahren der Ansprüche 1 bis 4 auszuführen.

6. Computerimplementiertes System, das Folgendes umfasst:
einen oder mehrere Computer; und
eine oder mehrere Computerspeichervorrichtungen, die mit dem einen oder den mehreren Computern betriebstechnisch gekoppelt sind und materielle, nicht transitorische, maschinenlesbare Medien besitzen, die einen oder mehrere Befehle speichern, die dann, wenn sie durch einen oder mehrere Computer ausgeführt werden, eine oder mehrere Operationen gemäß einem der Verfahren der Ansprüche 1 bis 4 ausführen.

## Revendications

1. Procédé informatisé (100) comprenant :
le chiffrement, par un demandeur de ressources, d'une première clé publique en utilisant une deuxième clé privée ;
la transmission, par le demandeur de ressources et à un fournisseur de ressources, de la première clé publique chiffrée ;
la réception, par le fournisseur de ressources et depuis le demandeur de ressources, de la première clé publique chiffrée ;
le déchiffrement, par le fournisseur de ressources, de la première clé publique chiffrée reçue en utilisant une deuxième clé publique, la deuxième clé privée et la deuxième clé publique étant une deuxième paire de clés asymétriques et appariées mutuellement générées par un serveur de ressources, la première clé privée et la première clé publique chiffrée étant transmises au demandeur de ressources par le serveur de ressources et la deuxième clé publique étant transmise au fournisseur de ressources par le serveur de ressources et la deuxième clé publique étant transmise au fournisseur de ressources par le serveur de ressources de manière à ce que le fournisseur de ressources puisse déchiffrer la première clé publique chiffrée en utilisant la deuxième clé publique afin d'obtenir la première clé publique ; et
la détermination, par le demandeur de ressources, d'un horodatage d'une dernière information de vérification reçue, et, en réponse à la détermination qu'une heure courante dépasse l'heure représentée par l'horodatage d'un temps prédéfini :
la demande, par le demandeur de ressources, d'une autre information de vérification venant du serveur de ressources,
la transmission, par le serveur de ressources, de l'autre information de vérification au demandeur de ressources si le demandeur de ressources a un solde réel ou un solde créditeur qui dépasse un nombre prédéfini,
la transmission (110, 220), par le demandeur de ressources et au fournisseur de ressources, d'une information associée à une opération de ressource, l'opération de ressource étant associée à une ressource stockée sur un serveur de ressources, l'information associée à l'opération de ressource comprenant une information d'autorisation générée par le demandeur de ressources et l'autre information de vérification, l'information d'autorisation fournissant une sécurité lors de l'exécution d'une opération de ressource, l'information d'autorisation étant chiffrée (210) par le demandeur de ressources en utilisant la première clé privée avant la transmission (110, 220) au fournisseur de ressources, et l'autre information de vérification étant chiffrée par le serveur de ressources en utilisant une troisième clé privée, l'information de vérification reçue étant déchiffrée par le fournisseur de ressources en utilisant une troisième clé publique avant d'exécuter l'opération de ressource, et la troisième clé privée et la troisième clé publique étant une troisième paire de clés asymétriques et appariées mutuellement générées par le serveur de ressources,
la réception (120, 230), par le fournisseur de ressources et depuis le demandeur de ressources, de l'information associée à l'opération de ressource, cette information comprenant l'information d'autorisation et l'autre information de vérification, l'information d'autorisation comprenant au moins soit une identification d'utilisateur du demandeur de ressources, soit un horodatage associé à l'information d'autorisation, l'information d'autorisation reçue étant déchiffrée (240) par le fournisseur de ressources en utilisant la première clé publique avant d'exécuter (130, 250) l'opération de ressource, la première clé privée et la première clé publique étant une première paire de clés asymétriques et appariées mutuellement générées par le serveur de ressources, et, lorsque la première clé privée et la première clé publique sont utilisées pendant plus qu'une première période de temps prédéfinie, la mise à jour, par le serveur de ressources, de la première clé privée et de la première clé publique en générant une nouvelle paire de clés privée et publique, et
l'exécution (130, 250), par le fournisseur de ressources, de l'opération de ressource en se basant sur l'information reçue du demandeur de ressources plutôt que sur l'information venant du serveur de ressources.

2. Procédé selon la revendication 1, comprenant en outre la génération d'un motif d'image en se basant au moins soit sur l'information d'autorisation, soit sur l'information de vérification, ce motif d'image comprenant soit un code à barres, soit un code QR.

3. Procédé selon la revendication 1, dans lequel l'exécution de l'opération de ressource comprend l'attribution d'un droit de passage de porte au demandeur de ressources.

4. Procédé selon l'une quelconque des revendications 1 à 3, comprenant en outre :
lorsque la deuxième clé privée et la deuxième clé publique sont utilisées pendant plus qu'une deuxième période de temps prédéfinie, la mise à jour, par le serveur de ressources, de la deuxième clé publique et de la deuxième clé privée en générant une nouvelle paire de clés privée et publique.

5. Support de stockage non transitoire lisible par ordinateur stockant une ou plusieurs instructions exécutables par un système informatique afin d'exécuter des opérations selon l'un quelconque des procédés des revendications 1 à 4.

6. Système informatisé, comprenant :
un ou plusieurs ordinateurs ; et
un ou plusieurs dispositifs de mémoire d'ordinateur couplés de manière interfonctionnelle à l'ordinateur unique ou aux ordinateurs multiples et ayant des supports tangibles non transitoires lisibles par machine stockant une ou plusieurs instructions qui, lorsqu'elles sont exécutées par le ou les ordinateurs, effectuent une ou plusieurs opérations selon l'un quelconque des procédés des revendications 1 à 4.
